# EUROPEAN PATENT APPLICATION

(11) **EP 1 394 315 A1**
(43) Date of publication of application: **03.03.2004**
(21) Application number: 02717063.8
(22) Date of filing: 03.04.2002
(51) Int. Cl.: D06M 15/693, C08J 5/06, C08L 71/03

(54) **TREATING AGENT, CORD FOR RUBBER REINFORCEMENT, AND RUBBER PRODUCT**

(30) Priority: 18.04.2001 JP 2001119004
(71) Applicant: Nippon Sheet Glass Co., Ltd., Osaka-shi, Osaka 541-8559 (JP)
(72) Inventor: KAWAGUCHI, Satoru, c/o Nippon Sheet Glass Co, Ltd., Osaka-shi, Osaka 541-8559 (JP)
(74) Representative: KOHLER SCHMID + PARTNER
(86) International application number: PCT/JP2002/003332
(87) International publication number: WO 2002/086226

(57) **Abstract**

A rubber reinforcing cord has a first film comprising a processing agent containing a resorcinol-formalin condensate, and a rubber latex, and a second film comprising a processing agent containing a rubber composition, a vulcanizer, and an epichlorohydrine-based rubber.

## Description

### Technical Field

The present invention relates to a rubber reinforcing cord for use as a reinforcing material for matrix rubbers containing hydrogenated nitrile rubber excellent in flexibility and heat resistance (hereinafter referred to as "H-NBR") and hydrogenated nitrile rubber with a zinc acrylate derivative finely dispersed therein (hereinafter referred to as "H-NBR/ZDMA"), and also relates to a processing agent for use in forming a second film of the rubber reinforcing cord, and a rubber product containing the rubber reinforcing cord.

### Background Art

To improve the strength and durability of rubber products such as rubber belts and rubber tires, it has been widely employed to embed glass fiber or chemical fiber as a reinforcing base material in the matrix rubber.

Such fiber base materials, however, generally have a low affinity to rubber and hence low adhesiveness or adherence thereto, and therefore, if the fiber base materials are embedded in the rubber without treating the surfaces thereof, the base materials do not adhere to the rubber or adhere thereto with low adhesive strength such that they easily come off the rubber. For this reason, a film has been formed on the surfaces of the fiber base materials to improve the affinity to the matrix rubber of the rubber product and hence improve the adhesiveness. For example, a glass fiber cord is known, which has a film formed thereon by applying a processing agent composed of a mixture of a resorcinol-formalin condensate and an H-NBR latex to glass fiber and drying the processing agent to become hardened (Japanese Laid-Open Patent Publication (Kokai) No. 63-270877). Further, a rubber reinforcing cord has been proposed, on which are formed a second film containing a halogen-containing polymer and isocyanate, and moreover a third film containing rubber which is identical with the matrix rubber of the rubber product (Japanese Patent Publication (Kokoku) No. 5-71710). Furthermore, there is known a reinforcing fiber base material which is embedded in a rubber product formed of H-NBR as a matrix material and which has been subjected to surface treatment with an adhesive containing H-NBR having a carboxyl group, a resorcinol-formaldehyde resin, and an aromatic epoxy resin (Japanese Laid-Open Patent Publication (Kokai) No. 8-333564).

There are, however, various reinforcing fiber base materials and matrix rubbers which have different compositions and hence different properties. Therefore, it is necessary to select suitable ones from various reinforcing base materials and matrix rubbers according to intended use or application with their properties taken into consideration. Nowadays, there are many types of matrix rubbers and reinforcing fiber base materials, and hence it is not easy to find the optimum combination of a matrix rubber and a reinforcing fiber material.

H-NBR is noted for its high heat resistance and flexibility and therefore a rubber product using H-NBR as the base material is suited for use as a member which is bent and stretched under a hot environment, such as a timing belt for engines. Thus, H-NBR has been conventionally widely used for this purpose. Moreover, recently, a matrix rubber composed of H-NBR with H-NBR/ZDMA added thereto has come to attract attention. It is known that a rubber product composed of this matrix rubber has higher heat resistance than a rubber product composed only of H-NBR as the matrix rubber.

Thus, the rubber reinforcing cord described in Japanese Laid-Open Patent Publication (Kokai) No. 63-270877 has insufficient adhesiveness to a matrix rubber with H-NBR/ZDMA added thereto though it has high adhesiveness to a matrix rubber composed only of H-NBR. The rubber reinforcing cord described in Japanese Patent Publication (Kokoku) No. 5-71710 may use H-NBR as a mere example of matrix rubber and inherently has insufficient adhesiveness to H-NBR. In addition, this rubber reinforcing cord has three layers of films formed on the fiber base material and hence its manufacturing process is complicated, leading to increased manufacturing costs. On the other hand, the rubber reinforcing material described in Japanese Laid-Open Patent Publication (Kokai) No. 8-333564 is intended to enhance the adhesiveness to a matrix rubber containing H-NBR and H-NBR/ZDMA, but since a single film is formed on the surface of the reinforcing base material, its adhesiveness is not always sufficient.

The present invention has been devised in view of the above described problems, and it is an object of the present invention to provide a processing agent which is capable of strongly bonding a fiber base material to a matrix rubber containing H-NBR and H-NBR/ZDMA, and a rubber reinforcing cord in which a first film and a second film which is composed of the above processing agent are formed on a fiber base material. Another object of the present invention is to provide a rubber product which utilizes properties of this matrix rubber so as to be able to maintain high strength over a long time when used as a member which is repeatedly bent and stretched under a hot environment.

### Disclosure of the Invention

To attain the above object, the processing agent according to the present invention is characterized by containing a rubber composition, a vulcanizer, and an epichlorohydrine-based rubber.

Further, the rubber reinforcing cord according to the present invention is characterized by comprising a first film comprising a processing agent containing a resorcinol-formalin condensate, and a rubber latex, and a second film comprising the above processing agent according to the present invention.

Further, the rubber product according to the present invention is characterized by comprising a matrix rubber containing a hydrogenized nitrile rubber, and a hydrogenized nitrile rubber having a zinc acrylate derivative finely dispersed therein, and the rubber reinforcing cord according to the present invention.

### Best Mode for Carrying Out the Invention

An embodiment of the present invention will now be described in detail.

The present inventor carried out assiduous studies in order to solve the above-mentioned problems, and as a result, reached the findings that, by forming the outmost film, i.e. a second film on the fiber base material, from a processing agent containing a rubber composition, a vulcanizer, and an epichlorohydrine-based rubber, the adhesiveness of the fiber base material to a mixture rubber formed of H-NBR and H-NBR/ZDMA can be enhanced to a remarkably higher degree, and by providing a first film containing a resorcinol-formalin condensate (hereinafter referred to as "RF") and a rubber latex, the adhesiveness between the fiber base material itself and the second film can be enhanced.

There is no particular limitation on the type of the fiber base material, and for example, it may be formed of glass fiber, polyvinyl alcohol fiber represented by vinylon fiber, polyester fiber, polyamide fiber such as nylon and aramid (aromatic polyamide), carbon fiber, or poly-paraphenylene benzoxazole fiber. Among these fibers, glass fiber and aramid fibers have far higher tensile strength than the other fibers and hence are particularly suitable for use as a reinforcing material in the rubber product. In particular, glass fiber is an inorganic fiber which has high heat resistance and hence is suitable for use as a reinforcing material in a rubber product composed of a matrix rubber containing H-NBR and H-NBR/ZDMA. The glass fiber includes no-alkali glass, high-strength glass, and others, but there is no particular limitation on the type of glass fiber. The suitable filament diameter of the glass fiber is 5 to 13 µm. The suitable filament diameter of the aramid fiber is generally 400 to 5,000 deniers. The form of these fibers is not limitative, and may include staple, filament, cord, rope, and canvas or duck, for example. If glass fiber is used, a glass fiber string composed of 200 to 2000 glass filaments bound together is handled as glass fiber, and therefore the glass fiber is preferably treated in advance by a binder containing a silane coupling agent, starch or the like.

The rubber latex contained in the first film may include a butadiene-styrene copolymer latex, a dicalboxylated butadiene-styrene copolymer latex, a vinylviridine butadiene styrene terpolymer latex, a chloroprene latex, a butadiene rubber latex, a chlorosulfonated polyethylene latex, an acrylonitrile-butadiene copolymer latex, a nitrile group-containing highly saturated copolymer rubber latex, for example. Among these latexes, the dicalboxylated butadiene-styrene terpolymer latex or the chlorosulfonated polyethylene latex is particularly suitable. If the rubber latex is composed of a mixture of two or three of the dicalboxylated butadiene-styrene copolymer latex, the vinylviridine butadiene styrene terpolymer latex, and the chlorosulfonated polyethylene latex, it is preferable that the concentration of a principal component ingredient thereof is 20 to 80 weight %. For example, in the case of the dicalboxylated butadiene-styrene copolymer latex, it is preferable that the latex contains 20 to 80 weight % of butadiene, 5 to 70 weight % of styrene, and 1 to 10 weight % of ethylenic unsaturated dicarboxylic acid. More specifically, Nipol 2570 (trade name: manufactured by ZEON Corporation) and JSR 0668 (trade name: manufactured by Japan Synthetic Rubber Co., Ltd.) may be used, for example. In the case of. the vinylviridine butadiene styrene terpolymer latex, terpolymers which are well known to those skilled in the art, for example, a latex in which the concentrations of vinylviridine, butadiene, and styrene are 10 to 20 weight %, 60 to 80 weight %, and 10 to 20 weight %, respectively, is particularly preferable. More specifically, Nipol 2518FS (trade name: manufactured by ZEON Corporation) and Pyratex (trade name: manufactured by Sumitomo Naugatuck Co., Ltd.) may be used, for example. In the case of the chlorosulfonated polyethylene latex, it is preferable that the concentrations of chlorine and sulfur are 25 to 43 weight % and 1.0 to 1.5 weight %, respectively. Specifically, Esprene (trade name: manufactured by Sumitomo Chemical Co., Ltd.) may be used, for example.

As RF contained in the first film, a resol-type water-soluble additive condensate obtained by reaction of resorcinol and formaldehyde under the presence of an alkaline catalyst such as alkali hydroxide and amine is preferable. The molar ratio for reaction of resorcinol and formaldehyde is preferably 1:0.5 to 3.

It is preferable that the content ratio between RF and the rubber latex in the first film is RF: 20 to 15 weight % and the rubber latex: 98 to 85 weight % in terms of solids content ratio. If the RF content exceeds 15 weight %, the first film will become harder, which can result in degraded bending fatigue resistance of the rubber product. On the other hand, if the RF content is less than 2 weight %, the adhesiveness of the first film to the fiber base material and the second film will be insufficient.

The processing agent for the first film is comprised of component materials blended such that the solids content ratio between RF and the rubber latex is equal to the above ratio, and a solvent added in such an amount that the total solids content is 10 to 40 weight %, preferably 20 to 38 %. As the solvent, water may be used. Ammonia and alcohol may be added in appropriate amounts to improve the affinity of blended component ingredients if required. If the total solids content is less than 10 weight %, it will result in an insufficient ratio of attachment of the first film to the fiber base material, whereas if it exceeds 40 weight %, it will be difficult to control the attachment ratio such that RF and the rubber latex can be evenly attached to the surfaces of the fiber base material.

The rubber composition contained in the processing agent for the second film is added to improve the affinity to the matrix rubber and is required to have compatibility to the matrix rubber and the first film. If the matrix rubber is a mixture rubber of H-NBR and H-NBR/ZDMA, the preferable rubber composition includes chloroprene rubber, chlorosulfonated polyethylene, H-NBR, or H-NBR/ZDMA. Any one of these materials or a combination of two or more of them may be used. The chlorosulfonated polyethylene should preferably have a chlorine content of 20 to 45 weight %, and a sulfonyl sulfur content of 1 to 2.5 weight %, and preferably a chlorine content of 25 to 45 weight %, and a sulfonyl sulfur content of 1.0 to 1.5 weight %. More specifically, TS-340 (trade name: manufactured by Tosoh Corporation) which has a chlorine content of 43 weight % and a sulfur content of 1.1 weight % is preferable.

The vulcanizer contained in the processing agent for the second film takes part in crosslinking reaction with the rubber composition and/or the epichlorohydrine-based rubber and acts to improve the strength of the second film. Further, the vulcanizer vulcanizes the rubber composition and/or the epichlorohydrine-based rubber with the matrix rubber to improve the adhesiveness thereof. The vulcanizer may include organic di-isocyanate, an aromatic compound such as p-dinitroso nahthalene or p-dinitro benzene, maleimide, phenol maleimide, and N,N-m-phenylene dimaleimide, for example. These materials can be mixed in the above rubber composition in advance.

The epichlorohydrine-based rubber contained in the processing agent for the second film includes single polymer of epichlorohydrine, equimolar copolymer of epichlorohydrine and ethylene oxide, and three-dimensional copolymer obtained by copolymerizing allyl glycidylether with each of the above single polymer and the copolymer and introducing allyl group into the polymer principal chain thereof. For example, epichlorohydrine-ethylene oxide-allyl glycidylether copolymer, specifically, Hydrin T3106 (trade name: manufactured by Zeon Corporation) is preferable. The epichlorohydrine-based rubber is highly responsive to other rubber components, and hence when contained in the second film, it makes the second film have a denser chemical bond and higher strength. Further, the epichlorohydrine-based rubber also reacts with the matrix rubber to enhance the adhesive strength between the second film and the matrix rubber. Moreover, since the epichlorohydrine-based rubber itself has excellent heat resistance, the second film containing the epichlorohydrine-based rubber does not appreciably deteriorate due to heat.

The solvent used in the processing agent for the second film is needed for solving rubber contained therein, and as the solvent, aromatic hydrocarbon such as benzene, toluene or xylene, halogenated hydrocarbon such as trichloroethylene, methyl ethyl ketone (hereinafter referred to as "MEK"), and ethyl acetate may be used.

A preferable blending ratio of the component ingredients of the processing agent for the second film in terms of solid contents weight percent is rubber composition: vulcanizer: epichlorohydrine-based rubber = 100:2 to 320:50 to 200, and more preferably, 100: 60 to 170: 75 to 150. If the epichlorohydrine-based rubber content is less than 50 in terms of solid contents weight percent, the adhesiveness to the matrix rubber containing H^NBR and H-NBR/ZDMA can be insufficient under a hot environment. On the other hand, if the epichlorohydrine-based rubber content exceeds 200, the initial adhesiveness to the matrix rubber can be insufficient. An inorganic filler such as carbon black, a plasticizer, an antioxidant and/or other crosslinking coagents may be added to the processing agent for the second film, if required.

The total solids concentration of the processing agent for the second film is preferably 3 to 25 weight %, and more preferably, 5 to 15 weight %. This processing agent may be a dispersion. If the total solids concentration is less than 3 weight %, the degree of attachment to the fiber base material can be insufficient, whereas if it exceeds 25 weight %, it will be difficult to control the attachment ratio such that the second film is evenly attached to the surfaces of the fiber base material.

There is no particular limitation on the method of forming the second film. A common method in which the fiber base material with the first film is immersed in a solvent bath containing the processing agent for the second film, and then passed through a heated-air drying furnace to remove the solvent may be directly used. There is no particular limitation on the drying conditions using this method, but it is preferable to pass the fiber base material through the heated-air drying furnace heated in advance to a furnace temperature of 80 to 160 °C over a time period of 0.1 seconds to 1 second. Further, there is no particular limitation on the method of forming the first film and a similar method to the method of forming the second film can be used.

It is preferable that the second film should be formed so as to evenly cover the entire surface of the rubber reinforcing cord. In this case, the attachment ratio of the second film is 1 to 10 weight % relative to the weight of the rubber reinforcing cord (including the second film), and preferably, 3 to 7 weight %. If the attachment ratio of the second film is less than 1 weight %, it is likely that part of the surface of the rubber reinforcing cord is not formed with the second film, whereas if the attachment ratio exceeds 10 weight %, it takes long to dry the processing agent so that liquid drops can cause distortion of the surface of the second film.

In the rubber reinforcing cord obtained by the above means, the second film is disposed in contact with the matrix rubber containing H-NBR and H-NBR/ZDMA, and heated and/or pressurized to adhere to the matrix rubber and/or be embedded therein. If the rubber reinforcing cord is embedded in the matrix rubber, a rubber product is obtained, but the shape of the rubber product can be appropriately adjusted according to its usage. There is no particular limitation on the method of adjusting the shape of the rubber product, and a known method can be directly used. This rubber product is comprised of a mixture rubber in which the matrix rubber contains H-NBR and H-NBR/ZDMA, and therefore has very high heat resistance and bending fatigue resistance, and hence is most suited for use as a timing belt for engines.

### Examples

The present invention will be further described in detail hereinbelow with reference to examples according to the present invention and comparative examples.

### Example 1

Three glass fibers (E glass composition; each formed of a string of 200 glass filaments each having a diameter 9 µm) were placed in parallel without being twisted and conveyed while being immersed in a bath of a first film processing agent (processing agent for first film) shown in Table 1 given below so that the processing agent became attached to the glass fibers. Then, the glass fibers were placed into a heated-air drying furnace at a furnace temperature of 90°C and left there for 25 seconds, to form a first film. The first film thus attached to the glass fibers had a content of 12 weight % relative to the weight of the glass fibers (inclusive of the first film).

**TABLE 1**

| Processing Agent for First Film | |
|---|---|
| Chemical Composition | Content (wt%) |
| Vinylviridine Latex (Solid Content: 40 wt%) | 45 |
| Chlorosulfonated Polyethylene (Solid Content: 40 wt%) | 20 |
| RF (Solid Content: 8 wt%) (Resorcinol:Formaldehydc = 1:1.3 mol) | 30 |
| 25% Aqueous Ammonia | 1 |
| Water | 4 |

Next, the glass fibers were undertwisted in 8 turns per 10 cm, and then eleven strands of such undertwisted fibers were placed in parallel and overtwisted in 8 turns per 10 cm. Then, a second film processing agent (processing agent for second film) shown in Table 2 given below was applied to the rubber reinforcing cord to form a second film in the same manner as that used in forming the first film. The attachment ratio of this second film was 5 weight % relative to the weight of the rubber reinforcing cord.

**TABLE 2**

| Processing Agent for Second Film | |
|---|---|
| Chemical Composition | Content (wt%) |
| Rubber Composition | 100 |
| Toluene | 1200 |
| Epichlorohydrine-based Rubber (*1) | 120 |
| N,N-m-phenylene Dimaleimide | 90 |

| | |
|---|---|
| *1: Hydrin T3106 (Trade Name: Manufactured by Zeon Corporation) | |

The chemical composition of a rubber composition shown in Table 2 is shown in Table 3 given below.

**TABLE 3**

| Rubber Composition = Matrix Rubber | |
|---|---|
| Chemical Composition | Content (wt%) |
| H-NBR (*1) | 70 |
| H-NBR/ZDMA (*2) | 30 |
| ZnO | 10 |
| Stearinc Acid | 1 |
| Carbon Black | 30 |
| TOTM (Trioctyl Trimellitate) | 5 |
| Sulfur | 0.1 |
| 1.3-Bis-(t-butylperoxy-isopropyl)-benzene | 6 |

| | |
|---|---|
| *1: ZETPOL2020 (Manufactured by Zeon Corporation) | |
| *2: ZSC2000L (Manufactured by Zeon Corporation) | |

This rubber reinforcing cord was embedded in a matrix rubber containing H-NBR and H-NBR/ZDMA, and the bond strength thereof was measured. As the matrix rubber, the rubber composition shown in Table 3 was used.

First, a test piece having a composition shown in Table 3 (width 25mm x length 50mm x thickness 5mm) was prepared, and the rubber reinforcing cord was arranged on the test piece along the longer side thereof, followed by being heated to 160°C for 30 minutes so that the rubber reinforcing cord became embedded in the test piece. The test piece thus obtained was subjected to a known adhesion test to measure the initial bond strength thereof.

Further, a test piece containing the rubber reinforcing cord was separately prepared using the above means and subjected to heat treatment for 168 hours in an air oven at a furnace temperature of 120°C. The bond strength of the test piece after the heat treatment was measured using the above adhesion test. The measurement results are shown in Table 5 given below.

### Example 2

In place of glass fibers as used in Example 1, aramid fiber of 1500 d (Technora T202 manufactured by Teijin Ltd.) was used to form a first film (the attachment ratio was 12%). In forming the first film, the fibers were soaked in a heated-air drying furnace at a furnace temperature of 250°C for one minute.

Two pieces of this fiber base material were put together and undertwisted in 3.1 turns per inch to form a second film using the same second film processing agent and drying conditions as used in Example 1. The content of the second film was 10 weight % relative to the weight of the rubber reinforcing cord. The bond strength of this rubber reinforcing cord to the matrix rubber was measured using the same method as used in Example 1, results of which are also shown in Table 5 given below.

### Comparative Example 1

Except that a processing agent shown in Table 4 given below was used as the second film processing agent, a fiber base material having a second film was prepared in the same manner as in Example 1. The bond strength of this rubber reinforcing cord to the matrix rubber was measured under the same conditions as in Example 1, results of which are also shown in Table 5 given below.

**TABLE 4**

| Processing Agent for Second Film in Comparative Examples 1 and 2 | |
|---|---|
| Chemical Composition | Content (wt%) |
| Rubber Composition | 100 |
| Toluene | 550 |
| N,N-m-phenylene Dimaleimide | 45 |

### Comparative Example 2

Except that the processing agent shown in Table 4 was used as the second film processing agent, a fiber base material having a second film was prepared in the same manner as in Example 2. The bond strength of this rubber reinforcing cord to the matrix rubber was measured under the same conditions as in Example 1, results of which are also shown in Table 5 given below.

### Comparative Example 3

A second film was directly formed on a fiber base material without a first film as in Example 1being formed thereon, and further, an aromatic epoxy resin (Epikote 154 manufactured by Japan Epoxy Resins Co., Ltd.) was used as the second film processing agent in place of an epichlorohydrine-based rubber as used in Example 1. Except for these, a fiber base material with a second film was prepared in the same manner as in Example 1, and the bond strength of the same to the matrix rubber was examined, results of which are also shown in Table 5 given below. This fiber base material corresponds to the product of Japanese Laid-Open Patent Publication (Kokai) No. 8-333564.

**TABLE 5**

| Bond Strength to Matrix Rubber | | | | | |
|---|---|---|---|---|---|
| Item | Examples | | Comparative Examples | | |
| | 1 | 2 | 1 | 2 | 3 |
| Fiber Base Material Type | Glass | Aramid | Glass | Aramid | Glass |
| Initial Bond Strength (kg/25mm) | 32 | 21 | 30 | 22 | 16 |
| After Heat Treatment Bond Strength (kg/25mm) | 28 | 18 | 14 | 11 | 10 |

Comparisons between Examples and Comparative Examples will show the following:

A comparison between Example 1 and Comparative Example 3 will show that even if epoxy resin is present in the outermost film of the rubber reinforcing cord in contact with the matrix rubber containing H-NBR and H-NBR/ZDMA, the adhesiveness between the matrix rubber and the rubber reinforcing cord does not improve. Further, the reason why the bond strength of Comparative Example 3 is remarkably inferior to that of Comparative Example 1 or 2 is considered to be that no first film is present in Comparative Example 3.

### Industrial Applicability

According to the present invention, since a first film containing RF and a rubber latex and a second film comprising a processing agent containing containing a rubber composition, a vulcanizer, and an epichlorohydrine-based rubber are provided on a fiber base material, it is possible to provide a rubber reinforcing cord that can be firmly attached to a matrix rubber containing H-NBR and H-NBR/ZDMA. Further, it is possible to provide a rubber product that is suited for usage in which heat resistance and bending fatigue resistance are required, utilizing properties of this matrix rubber.

## Claims

1. A processing agent **characterized by** containing a rubber composition, a vulcanizer, and an epichlorohydrine-based rubber.

2. A rubber reinforcing cord **characterized by** comprising a first film comprising a processing agent containing a resorcinol-formalin condensate, and a rubber latex, and a second film comprising a processing agent as clamed in claim 1.

3. A rubber product **characterized by** comprising a matrix rubber containing a hydrogenized nitrile rubber, and a hydrogenized nitrile rubber having a zinc acrylate derivative finely dispersed therein, and a rubber reinforcing cord as claimed in claim 2.
